# EUROPEAN PATENT SPECIFICATION

(11) **EP 4 501 605 B1**
(45) Date of publication and mention of the grant of the patent: **04.11.2026**
(21) Application number: 24191806.9
(22) Date of filing: 30.07.2024
(51) Int. Cl.: B29C 70/20, B29D 99/00, B29C 70/30, F01D 5/28

(54) **AIRFOIL WITH SEQUENCED FIBER LAYUP AND METHOD FOR ITS MANUFACTURE**
SCHAUFEL MIT SEQUENZIERTER FASERLAMINIERUNG UND VERFAHREN ZU DEREN HERSTELLUNG
PROFIL AÉRODYNAMIQUE AVEC SUPERPOSITION DE FIBRES SÉQUENCÉES ET PROCÉDÉ POUR SA FABRICATION

(30) Priority: 01.08.2023 US 202318363644
(43) Date of publication of application: 05.02.2025
(73) Proprietor: RTX Corporation, Farmington, CT 06032 (US)
(72) Inventor: TATTON, Royce E., Farmington, 06032 (US); SALISBURY, George Alan, Farmington, 06032 (US); LI, Xuetao, Farmington, 06032 (US)
(74) Representative: Dehns

(56) References cited:
- EP-A1- 3 308 947
- EP-A1- 3 543 467
- EP-A1- 4 130 434
- US-A1- 2012 141 288
- US-B2- 10 830 062
- VAN WALLENE ALLARD ET AL: "Zastosowanie technologii Thinpreg w budowie modeli swobodnie latajacych", TECHNIKA LOTNICZA I ASTRONAUTTYCZNA, AVIATION AND SPACE TECHNOLOGY, 1 January 2022 (2022-01-01), pages 38 - 42, XP093235274, Retrieved from the Internet <URL:https://bc.pollub.pl/Content/13811/tlia-3-4-2022.pdf> [retrieved on 20241217]

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-pressure and temperature exhaust gas flow. The high-pressure and temperature exhaust gas flow expands through the turbine section to drive the compressor and the fan section. The compressor section may include low and high pressure compressors, and the turbine section may also include low and high pressure turbines.

Airfoils in the fan section or other sections of the engine may be formed of metallic alloys or composite material. Composite materials may include a layup of fiber plies that are impregnated with a matrix material. However, relative to the in-plane strength of the fiber plies, the composite material is weaker along the matrix-rich interface between the plies and may thus delaminate.

EP 4 130 434 A1 discloses a prior art airfoil as set forth in the preamble of claim 1 and a method of fabricating an airfoil as set forth in the preamble of claim 7.

### SUMMARY

From one aspect, there is provided an airfoil as recited in claim 1.

There is also provided a gas turbine engine as recited in claim 6.

There is also provided a method of fabricating an airfoil as recited in claim 7.

Features of embodiments are set forth in the dependent claims.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a gas turbine engine.
Figure 2 illustrates a fan from the engine.
Figure 3 illustrates a sequenced layup structure of a composite material.
Figure 4 illustrates another sequenced layup structure of a composite material with different layup angles.
Figure 5 illustrates a sequenced layup structure of a composite material with different layup angles.

In this disclosure, like reference numerals designate like elements where appropriate and reference numerals with the addition of one-hundred or multiples thereof designate modified elements that are understood to incorporate the same features and benefits of the corresponding elements. Terms such as "first" and "second" used herein are to differentiate that there are two architecturally distinct components or features. Furthermore, the terms "first" and "second" are interchangeable in that a first component or feature could alternatively be termed as the second component or feature, and vice versa.

### DETAILED DESCRIPTION

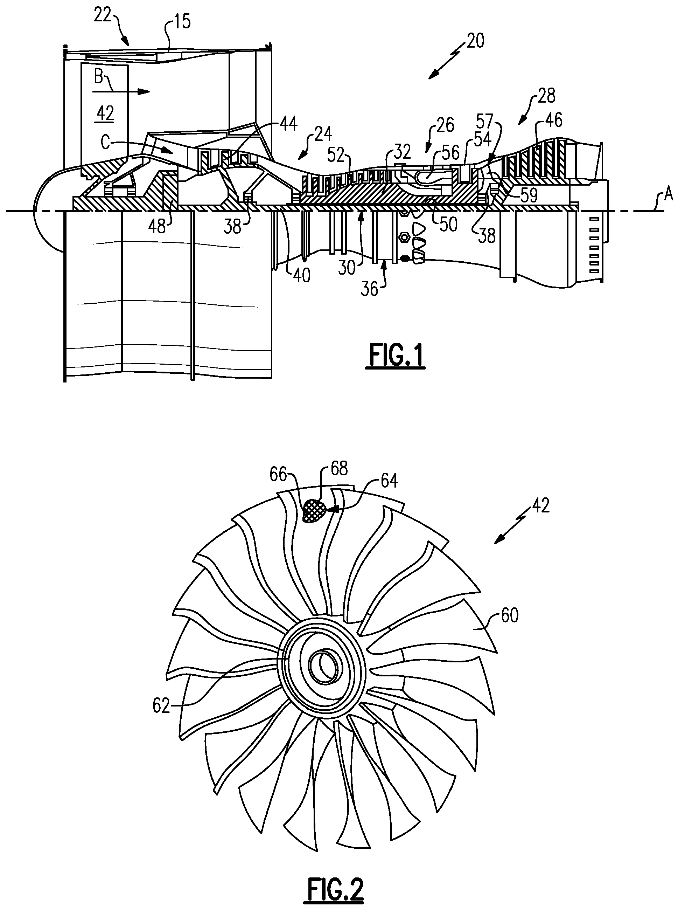

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150.0 *ft* / second (350.5 meters/second), and can be greater than or equal to 1000.0 ft / second (304.8 meters/second).

Figure 2 illustrates an isometric view of the fan 42. The fan 42 includes fan blades 60 that are attached with a central hub 62. As shown in partial cutaway view, each of the blades 60 is formed of a fiber-reinforced composite material 64 that includes fiber tows 66 disposed in a matrix material 68. For the fan 42 or other articles that are not typically exposed to high temperatures (e.g., as in the turbine section 28), the composite material 64 is an organic matrix composite. As an example, the fiber tows 66 are, but are not limited to, carbon fibers, ceramic fibers, glass fibers, or metallic fibers. The matrix material 68 is, but is not limited to, epoxy, polyester, or other thermosetting polymers. It is also to be appreciated that the fan blades 60 are used herein to demonstrate a representative example of an airfoil and that this disclosure is applicable to fan blades, guide vanes, and blades and vanes in other sections of the engine, including the compressor section 24, as well as to fiber-reinforced composites other than organic matrix composites, such as ceramic matrix composites.

As indicated earlier herein, relative to the in-plane strength of fiber plies, a laminated composite material is typically weaker along the matrix-rich interface between plies. The fiber tows 66 of the fiber-reinforced composite material 64, however, are provided in a sequenced layup structure that in essence eliminates such laminate interfaces.

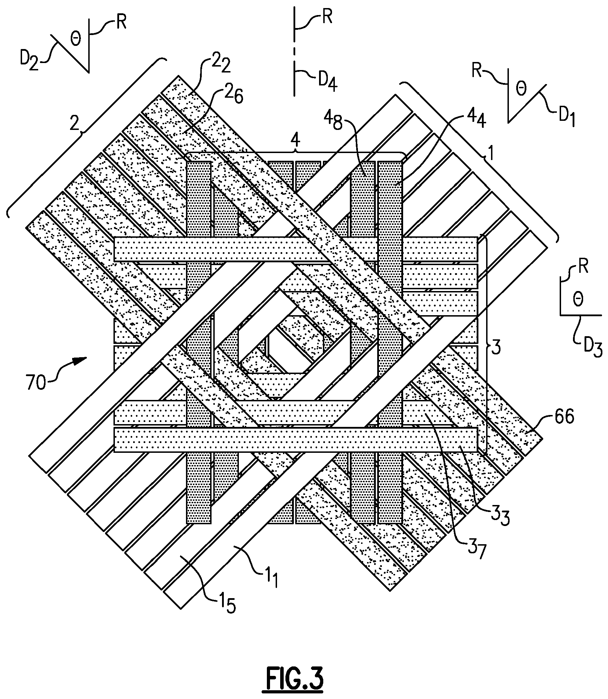

Referring to Figure 3, the fiber tows 66 are shown without the matrix material 68 in order to demonstrate an example of a sequenced layup structure 70. The fiber tows 66 may be provided individually or in tapes that include multiple fiber tows that are bound together, such as in a preimpregnated unidirectional fiber tape. The fiber tows 66 are arranged as groups, with the tows 66 of each group being commonly oriented at an angle Θ(theta) relative to a reference orientation. For instance, in the illustrated example there are four groups numbered 1 through 4. Relative to a vertical reference axis R in the figure, the fiber tows 66 of each group 1-4 are oriented along a respective directional axis D1, D2, D3, and D4 at angle Θ(theta). That is, the lengthwise axis of the tow or tape is parallel or substantially parallel to the respective directional axis D1, D2, D3, and D4. In this example, the angles Θ(theta) are multiples of 45°. The angle Θ(theta) of group 1 is +45°, angle Θ(theta) of group 2 is -45°, the angle Θ(theta) of group 3 is 90°, and the angle Θ(theta) of group 4 is 0°, i.e., a 0/-45/+45/90 layup.

In the sequenced layup structure 70 the fiber tows 66 cross-over each other according to a sequence N₁, N₂, N₃, ... Nᵢ, wherein N is a whole number representing the numerical group 1-4 that the unidirectional fiber tows are in and i is a whole number indicating a sequential layup order of the fiber tows 66 (i.e., the order in which the tows or tapes are placed when forming the layup). Each of the fiber tows 66 in the sequence starting at N₂ crosses-over the fiber tows 66 of the other ones of the groups 1-4 that have a lower value of i in the sequence. As used herein, the term "crosses-over" or variations thereof are not intended to imply any particular crossing angle between tows or tapes, and the crossing angle will be dictated by the relative angles Θ(theta) of groups

For instance, in forming the sequenced layup structure 70, the fiber tows 66 (or alternatively preimpregnated fiber tapes) are individually placed into a substrate (e.g., a mandrel or mold surface) according to the sequence. A process known as automated fiber placement is used to conduct tow or tape placement. In such a process, a machine places each tow or tape in accordance with computer-aided design data that contains programmed information of the sequence. In the example shown (which in Figure 3 is from a perspective looking up from the mold surface), the first placed fiber tow 66 of group 1 was the first tow overall to be placed and thus its sequence Nᵢ is designated as 1₁. The first placed fiber tow 66 of group 2 was the second tow overall to be placed and is thus designated as 2₂. The first placed fiber tow 66 of group 3 was the next overall to be placed and is thus designated as 3₃. The first placed fiber tow 66 of group 4 was the fourth to be placed overall and is thus designated as 4₄. The second placed fiber tow 66 of group 1 was the fifth overall to be placed and is thus designated as 1₅. The second fiber tow 66 of group 2 was the sixth overall to be placed and is thus designated as 2₆. The second fiber tow 66 of group 3 was the seventh overall to be placed and is thus designated as 3₇, and the second fiber tow 66 of group 4 was the eighth overall to be placed and is thus designated as 4₈.

In the illustrated example, each group 1-4 contains eight fiber tows (or tapes) and so the last tow 66 to be placed would be from group 4 and would designated 4₃₂ under the present nomenclature. In other words, as each tow 66 is placed onto the mold surface, it crosses-over the tows 66 of the other groups that were placed before it. Of course, in a given implementation each group may include fewer than eight tows 66 or, more likely, more than eight tows 66. The sequenced layup structure 70 has four groups.

As the fiber tows 66 of each group 1-4 are interleaved with the fiber tows 66 of the other groups, the resulting sequenced layup structure 70 in essence eliminates interlaminar interfaces that would otherwise be present if the groups 1-4 were instead provided as ply layers that are stacked one upon the next. Rather, there are local interfaces between adjacent overlapping fiber tows 66 (or tapes), but since the tows 66 are sequenced these local interfaces are at different "levels" in the sequence and are thus discontinuous from each other. In further examples, the thickness and/or width of the fiber tows or tapes are varied in order to modify the mechanical properties of the resulting composite article and create undulations that serve to interlock the tows/tapes together. For example, in the composite article a portion of the tows/tapes are of a first common thickness and width, and another portion of the tows/tapes are of a second common thickness and width that differs from the first common thickness and width. In this regard, thicker and wider tows/tapes billow into adjacent tow/tape levels and thereby limit lateral movement of the adjacent tows/tapes, thus serving to interlock tows/tapes between levels. In another example, the tapes/tows of one composite article of a first common thickness and width, and the tows/tapes are of a second composite article are of a second common thickness and width that differs from the first common thickness and width. In this regard, the properties of the composites can be varied by varying the selected thickness and width of the tows/tapes.

In the example of Figure 3, the tows 66 were placed by group order, one tow 66 from a group at a time. In a sequence involving placement of one tow 66 from a group at a time, each tow 66 (or tape) will have a unique Nᵢ in the sequence. Each local interface is thus on a unique different "level" in the sequence. Alternatively, the tows 66 or tapes can be placed more than one tow 66 (or tape) from a group at a time, in which case a portion of the tows 66 (or tapes) from the same group will have the same sequence designation that is not unique. For example, one such sequence would be 1₁, 1₁, 2₂, 2₂, 3₃, 3₃, 4₄, 4₄ for placement of two tows or tapes 66 from a group at a time. In that case, the local interfaces of the sequential tows from the same group are on the same "level" in the sequence and are thus continuous. As will be appreciated, in further examples, more than two tows (or tapes) 66 at a time from a group could be placed, or varying numbers of tows (or tapes) 66 at a time could be placed.

A method of fabricating the blades 60 or other type of composite article of the fiber-reinforced material 64 includes placing the fiber tows (or tapes) 66 according to the sequence N₁,N₂, N₃, ... Nᵢ, such as any of the sequences described above. The placing is conducted by automated fiber placement in which a machine places each tow or tape in accordance with computer-aided design data that contains programmed information of the sequence N₁, N₂, N₃, ... Nᵢ. After placement of all of the tows or tapes 66, the preform may be further processed by the application of heat to cure the matrix material 68. Such heating may be conducted in a mold that has the design shape of the component being formed. If the tows or tapes are not preimpregnated with the matrix material 68 (or precursor thereof), the further processing may include infiltrating or depositing the matrix material in the fiber preform, such as by resin transfer molding, vacuum molding, or injection molding. As will be appreciated, the processing will depend to a large extent on the type of matrix material 68 being used.

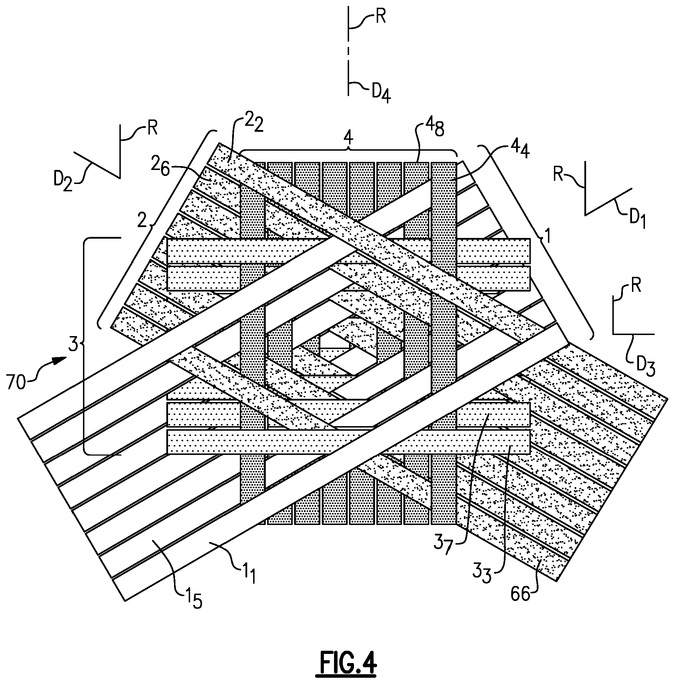

Figure 4 illustrates another example of the sequenced layup structure 70 that is similar to Figure 3 but with different angles Θ(theta). In this example, the angle Θ(theta) of group 1 is +60°, the angle Θ(theta) of group 2 is -60°, the angle Θ(theta) of group 3 is 90°, and the angle Θ(theta) of group 4 is 0°, i.e., a 0/-60/+60/90 layup.

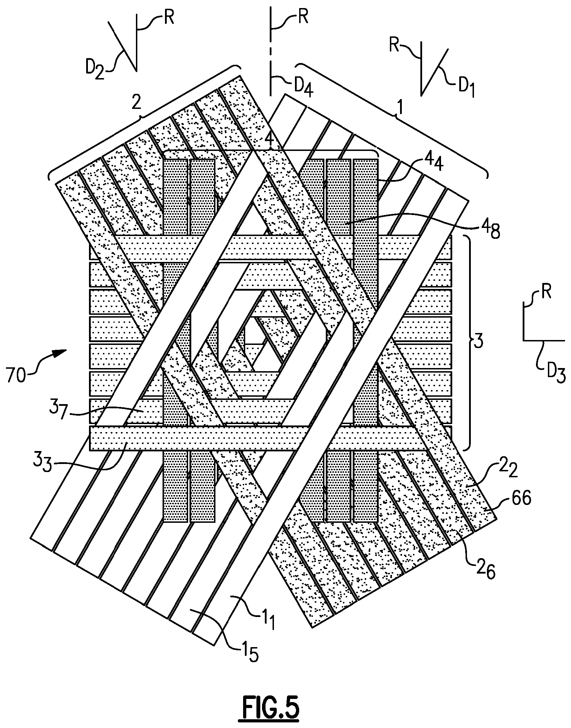

Figure 5 illustrates another example of the sequenced layup structure 70 that is also similar to Figure 3 but with different angles Θ(theta). In this example, the angle Θ(theta) of group 1 is +30°, the angle Θ(theta) of group 2 is -30°, the angle Θ(theta) of group 3 is 90°, and the angle Θ(theta) of group 4 is 0°, i.e., a 0/-30/+30/90 layup.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. An airfoil comprising:
an airfoil wall formed of a fiber-reinforced composite material (64) having a layup structure (70) including groups (1, 2, 3, 4) of unidirectional fiber tows (66), the groups (1, 2, 3, 4) being oriented at angles (Θ) relative to a reference orientation, the unidirectional fiber tows (66) crossing-over each other according to a sequence N₁, N₂, N₃, ... Nᵢ, wherein N is a whole number indicating which numerical group the unidirectional fiber tows (66) are in and i is a whole number indicating a sequential layup order of the unidirectional fiber tows (66), wherein N is 4 and i is at least 16,
**characterised in that**:
the angles (Θ) are selected from the group consisting of 0/-30/+30/90, 0/-45/+45/90, 0/-60/+60/90, and the sequence is 1₁, 2₂, 3₃, ... Nᵢ; and
each of the unidirectional fiber tows (66) in the sequence starting at N₂ crossing-over the unidirectional fiber tows (66) of the other ones of the groups (1, 2, 3, 4) that have a lower value of i in the sequence, such that the unidirectional fiber tows (66) of each group (1, 2, 3, 4) are interleaved with the unidirectional fiber tows (66) of the other groups (1, 2, 3, 4).

2. The airfoil as recited in claim 1, wherein the unidirectional fiber tows (66) are in tapes.

3. The airfoil as recited in claim 1 or 2, wherein each of the unidirectional fiber tows (66) has a unique Nᵢ in the sequence.

4. The airfoil as recited in any preceding claim, wherein the fiber-reinforced composite material (64) includes an organic matrix.

5. The airfoil as recited in any preceding claim, wherein the airfoil wall is in a gas turbine engine article selected from the group consisting of a blade and a vane.

6. A gas turbine engine (20) comprising:
a fan (42) including fan blades (60) having an airfoil as recited in any preceding claim;
a compressor section (24);
a combustor (56) in fluid communication with the compressor section (24); and
a turbine section (28) in fluid communication with the combustor (56).

7. A method of fabricating an airfoil, the method comprising:
forming an airfoil wall of a fiber-reinforced composite material (64) by placing fiber tows (66) on a surface at predetermined angles (Θ) relative to a reference orientation and according to a sequence N₁, N₂, N₃, ... Nᵢ, to produce a layup structure (70), wherein N is a whole number indicating a numerical group (1, 2, 3, 4) that the fiber tows (66) are in and i is a whole number indicating a sequential layup order that the fiber tows (66) are placed onto the surface, wherein N is 4 and I is at least 16, **characterized in that** the angles (Θ) are selected from the group consisting of 0/-30/+30/90, 0/-45/+45/90, 0/-60/+60/90, and the sequence is 1₁, 2₂, 3₃, ... Nᵢ, and each of the fiber tows (66) in the sequence starting at N₂ crosses-over the unidirectional fiber tows (66) of the other ones of the groups (1, 2, 3, 4) that have a lower value of i in the sequence, such that the unidirectional fiber tows (66) of each group (1, 2, 3, 4) are interleaved with the unidirectional fiber tows (66) of the other groups (1, 2, 3, 4).

8. The method as recited in claim 7, wherein the unidirectional fiber tows (66) are in preimpregnated tapes.

## Patentansprüche

1. Profilkörper, umfassend:
eine Profilkörperwand, ausgebildet aus einem faserverstärkten Verbundmaterial (64), das eine Lagenaufbaustruktur (70) aufweist, die Gruppen (1, 2, 3, 4) von unidirektionalen Fasersträngen (66) beinhaltet, wobei die Gruppen (1, 2, 3, 4) in Winkeln (θ) relativ zu einer Referenzorientierung orientiert sind, wobei die unidirektionalen Faserstränge (66) einander gemäß einer Sequenz N₁, N₂, N₃ ... Nᵢ überkreuzen, wobei N eine ganze Zahl ist, die angibt, in welcher numerischen Gruppe sich die unidirektionalen Faserstränge (66) befinden, und i eine ganze Zahl ist, die eine sequentielle Lagenaufbaureihenfolge der unidirektionalen Faserstränge (66) angibt, wobei N gleich 4 ist und i mindestens 16 ist,
**dadurch gekennzeichnet, dass**:
die Winkel (θ) aus der Gruppe bestehend aus 0/-30/+30/90, 0/-45/+45/90, 0/-60/+60/90 ausgewählt sind und die Sequenz 1₁, 2₂, 3₃ ... Nᵢ lautet; und
jeder der unidirektionalen Faserstränge (66) in der Sequenz, beginnend bei N₂, die einen kleineren Wert von i in der Sequenz aufweisenden unidirektionalen Faserstränge (66) der anderen der Gruppen (1, 2, 3, 4) überkreuzt, derart, dass die unidirektionalen Faserstränge (66) jeder Gruppe (1, 2, 3, 4) mit den unidirektionalen Fasersträngen (66) der anderen Gruppen (1, 2, 3, 4) verschachtelt sind.

2. Profilkörper nach Anspruch 1, wobei die unidirektionalen Faserstränge (66) in Bändern vorliegen.

3. Profilkörper nach Anspruch 1 oder 2, wobei jeder der unidirektionalen Faserstränge (66) ein eindeutiges Nᵢ in der Sequenz aufweist.

4. Profilkörper nach einem der vorhergehenden Ansprüche, wobei das faserverstärkte Verbundmaterial (64) eine organische Matrix beinhaltet.

5. Profilkörper nach einem der vorhergehenden Ansprüche, wobei sich die Profilkörperwand in einem Gasturbinentriebwerksbauteil befindet, das aus der Gruppe bestehend aus einer Laufschaufel und einer Leitschaufel ausgewählt ist.

6. Gasturbinentriebwerk (20), umfassend:
einen Fan (42), der Fanlaufschaufeln (60) beinhaltet, die einen Profilkörper nach einem der vorhergehenden Ansprüche aufweisen;
einen Verdichterabschnitt (24);
eine Brennkammer (56) in Fluidkommunikation mit dem Verdichterabschnitt (24); und
einen Turbinenabschnitt (28) in Fluidkommunikation mit der Brennkammer (56).

7. Verfahren zum Herstellen eines Profilkörpers, das Verfahren umfassend:
Ausbilden einer Profilkörperwand aus einem faserverstärkten Verbundmaterial (64) durch Platzieren von Fasersträngen (66) auf einer Oberfläche in vorgegebenen Winkeln (θ) relativ zu einer Referenzorientierung und gemäß einer Sequenz N₁, N₂, N₃ ... Nᵢ, um eine Lagenaufbaustruktur (70) zu erzeugen, wobei N eine ganze Zahl ist, die eine numerische Gruppe (1, 2, 3, 4) angibt, in der sich die Faserstränge (66) befinden, und i eine ganze Zahl ist, die eine sequentielle Lagenaufbaureihenfolge angibt, in der die Faserstränge (66) auf der Oberfläche platziert werden, wobei N gleich 4 ist und I mindestens 16 ist,
**dadurch gekennzeichnet, dass**
die Winkel (θ) aus der Gruppe bestehend aus 0/-30/+30/90, 0/-45/+45/90, 0/-60/+60/90 ausgewählt sind und die Sequenz 1₁, 2₂, 3₃ ... Nᵢ lautet und jeder der Faserstränge (66) in der Sequenz, beginnend bei N₂, die einen kleineren Wert von i in der Sequenz aufweisenden unidirektionalen Faserstränge (66) der anderen der Gruppen (1, 2, 3, 4) überkreuzt, derart, dass die unidirektionalen Faserstränge (66) jeder Gruppe (1, 2, 3, 4) mit den unidirektionalen Fasersträngen (66) der anderen Gruppen (1, 2, 3, 4) verschachtelt sind.

8. Verfahren nach Anspruch 7, wobei die unidirektionalen Faserstränge (66) in vorimprägnierten Bändern vorliegen.

## Revendications

1. Profil aérodynamique comprenant :
une paroi de profil aérodynamique constituée d'un matériau composite renforcé de fibres (64) ayant une structure de stratification (70) comportant des groupes (1, 2, 3, 4) de mèches de fibres unidirectionnelles (66), les groupes (1, 2, 3, 4) étant orientés selon des angles (θ) par rapport à une orientation de référence, les mèches de fibres unidirectionnelles (66) s'entrecroisant selon une séquence N₁, N₂, N₃, ... Nᵢ, dans lequel N est un nombre entier indiquant dans quel groupe numérique se trouvent les mèches de fibres unidirectionnelles (66) et i est un nombre entier indiquant un ordre de stratification séquentiel des mèches de fibres unidirectionnelles (66), dans lequel N est 4 et i est au moins 16,
**caractérisé en ce que** :
les angles (θ) sont choisis dans le groupe constitué de 0/-30/+30/90, 0/-45/+45/90, 0/-60/+60/90 et la séquence est 1₁, 2₂, 3₃, ... Nᵢ ; et
chacune des mèches de fibres unidirectionnelles (66) de la séquence commençant à N₂ croisent les mèches de fibres unidirectionnelles (66) des autres des groupes (1, 2, 3, 4) qui ont une valeur de i inférieure dans la séquence, de telle sorte que les mèches de fibres unidirectionnelles (66) de chaque groupe (1, 2, 3, 4) soient entrelacées avec les mèches de fibres unidirectionnelles (66) des autres groupes (1, 2, 3, 4).

2. Profil aérodynamique selon la revendication 1, dans lequel les mèches de fibres unidirectionnelles (66) sont en rubans.

3. Profil aérodynamique selon la revendication 1 ou 2, dans lequel chacune des mèches de fibres unidirectionnelles (66) a un Nᵢ unique dans la séquence.

4. Profil aérodynamique selon une quelconque revendication précédente, dans lequel le matériau composite renforcé de fibres (64) comporte une matrice organique.

5. Profil aérodynamique selon une quelconque revendication précédente, dans lequel la paroi de profil aérodynamique est dans un article de moteur à turbine à gaz choisi dans le groupe constitué d'une pale et d'une aube.

6. Moteur à turbine à gaz (20) comprenant :
un ventilateur (42) comportant des pales de ventilateur (60) ayant un profil aérodynamique selon une quelconque revendication précédente ;
une section de compresseur (24) ;
une chambre de combustion (56) en communication fluidique avec la section de compresseur (24) ; et
une section de turbine (28) en communication fluidique avec la chambre de combustion (56).

7. Procédé de fabrication d'un profil aérodynamique, le procédé comprenant :
la formation d'une paroi de profil aérodynamique en un matériau composite renforcé de fibres (64) en plaçant des mèches de fibres (66) sur une surface selon des angles (θ) prédéterminés par rapport à une orientation de référence et selon une séquence N₁, N₂, N₃, ... Nᵢ, pour produire une structure de stratification (70), dans lequel N est un nombre entier indiquant un groupe numérique (1, 2, 3, 4) dans lequel se trouvent les mèches de fibres (66) et i est un nombre entier indiquant un ordre de stratification séquentiel dans lequel les mèches de fibres (66) sont placées sur la surface, dans lequel N est 4 et I est au moins 16,
**caractérisé en ce que**
les angles (θ) sont choisis dans le groupe constitué de 0/-30/+30/90, 0/-45/+45/90, 0/-60/+60/90 et la séquence est 1₁, 2₂, 3₃, ... Nᵢ, et chacune des mèches de fibres unidirectionnelles (66) de la séquence commençant à N₂ croisent les mèches de fibres unidirectionnelles (66) des autres des groupes (1, 2, 3, 4) qui ont une valeur de i inférieure dans la séquence, de telle sorte que les mèches de fibres unidirectionnelles (66) de chaque groupe (1, 2, 3, 4) sont entrelacées avec les mèches de fibres unidirectionnelles (66) des autres groupes (1, 2, 3, 4).

8. Procédé selon la revendication 7, dans lequel les mèches de fibres unidirectionnelles (66) sont dans des rubans pré-imprégnés.
